# EUROPÄISCHE PATENTSCHRIFT

(11) **EP 0 490 935 B1**
(45) Veröffentlichungstag und Bekanntmachung des Hinweises auf die Patenterteilung: **03.11.1993**
(21) Anmeldenummer: 90913133.6
(22) Anmeldetag: 16.08.1990
(51) Int. Cl.: B23B 3/26

(54) **VORRICHTUNG ZUR HALTERUNG UND BETÄTIGUNG EINES PLANDREHKOPFES**
DEVICE FOR HOLDING AND OPERATING A FACING HEAD
DISPOSITIF POUR MAINTENIR ET ACTIONNER UNE TETE A SURFACER

(30) Priorität: 09.09.1989 DE 3930197
(43) Veröffentlichungstag der Anmeldung: 24.06.1992
(73) Patentinhaber: KOMET Präzisionswerkzeuge Robert Breuning GmbH, D-74354 Besigheim (DE)
(72) Erfinder: MÜNDLEIN, Werner, D-7120 Bietigheim-Bissingen (DE); STOLZ, Gerhard, D-7121 Ingersheim (DE)
(74) Vertreter: Wolf, Eckhard, Dr.-Ing.
(86) Internationale Anmeldenummer: EP9001344
(87) Internationale Veröffentlichungsnummer: WO9103340

(56) Entgegenhaltungen:
- DE-A- 3 222 751
- DE-A- 3 605 850
- DE-A- 3 637 823
- DE-A- 3 801 507

## Beschreibung

Die Erfindung betrifft eine Vorrichtung zur Halterung und Betätigung eines Plandrehkopfes mit einem an einer drehenden Maschinenspindel lösbar befestigbaren Tragkörper, mit einem am Tragkörper lösbar befestigbaren Kopfteil, mit mindestens einem im wesentlichen quer zur Drehachse am Kopfteil verschiebbaren, ein Werkzeug oder eine Werkzeugaufnahme tragenden Schieber, mit einem eine axial verschiebbare Stellstange und die Axialbewegung der Stellstange in eine Querbewegung des Schiebers umsetzende Getriebemittel aufweisenden Verstellmechanismus und mit einem im Tragkörper angeordneten, eintrittsseitig an eine Anschlußöffnung der Spindel anschließbaren und austrittsseitig in das Kopfteil mündenden, mit Druckflüssigkeit beaufschlagbaren Kühlmittelkanal.

Plandrehköpfe werden vorrangig zum Plandrehen von Werkstücksberflächen mit hoher Oberflächenqualität sowie zum Einstechen in der Innen- und Außenbearbeitung eingesetzt. Hinzu kommen Plandrehköpfe mit Schrägschiebern, wie sie beispielsweise für die Ventilbearbeitung notwendig sind, oder Kugeldrehköfe für die Achsen- bzw. Armaturenindustrie. Wechselaufsatzwerkzeuge erweitern das Einsatzgebiet eines Plandrehkopfs.

Bei einer bekannten Vorrichtung zur Halterung und Betätigung eines Plandrehkopfes der eingangs angegebenen Art (DE-C 2 608 930) weist der Verstellmechanismus eine koaxial zur Drehachse des Tragkörpers verschiebbar angeordnete Stellstange mit an zwei diametral gegenüberliegenden Seiten angeordneten Schrägverzahnungen auf, deren Zähne sich kreuzen, aber in bezug auf die Verschieberichtung der Stellstange im gleichen Winkel verlaufen. Am Schieber und einem Gegengewicht des Schiebers sind dort je zwei symmetrisch zur Stellstange angeordnete Zahnleisten vorgesehen, die mit der Schrägverzahnung der Stellstange kämmen. Die Zähne an den Zahnleisten des Schiebers verlaufen dabei entgegengesetzt zu denen der Zahnleisten des Gegengewichts. Statt des Gegengewichts kann auch ein zweiter, entgegengesetzt zum ersten Schieber verschiebbarer Schieber vorgesehen werden. Zur Betätigung der Stellstange ist eine eigens hierfür konstruierte, maschinenseitig betätigbare Planzugeinrichtung erforderlich, die zentral durch die Maschinenspindel hindurchgreift. In Bearbeitungszentren mit automatischem Werkzeugwechsel ist andererseits der zentrale Bereich der Maschinenspindel durch eine Einzugvorrichtung für das Werkzeug belegt, so daß dort eine zusätzliche Planzugeinrichtung nicht ohne weiteres untergebracht werden kann. Andererseits wäre es im Interesse einer Komplettbearbeitung von Werkstücken in einer Aufspannung von großem Vorteil, wenn Plandrehköpfe auch in Bearbeitungszentren eingesetzt werden könnten.

Es bietet sich hierbei an, das in jedem Bearbeitungszentrum vorhandene, mit hohem Druck von meist über 15 bar umgewälzte flüssige Kühlmittel als Antriebsmittel für die Planschieber zu verwenden.

Ausgehend hiervon liegt der Erfindung die Aufgabe zugrunde, eine Vorrichtung zur Halterung und Betätigung eines Plandrehkopfes der eingangs angegebenen Art zu entwickeln, mit welcher unter Einsatz der insbesondere auch in Bearbeitungszentren vorhandenen, unter Druck umgewälzten Kühlflüssigkeit eine auch bei hohen Drehzahlen zuverlässige und für den Dauerbetrieb geeignete Schieberverstellung gewährleistet ist.

Zur Lösung dieser Aufgabe wird gemäß der Erfindung folgende Merkmalskombination vorgeschlagen:
- Der Tragkörper weist zwei im Abstand voneinander angeordnete, zur Drehachse koaxiale Zylinder auf, in denen zwei starr miteinander gekoppelte und mit der Stellstange verbindbare Kolben angeordnet sind;
- der erste der beiden Zylinder ist auf der einen Kolbenseite mit Druckflüssigkeit aus dem Kühlmittelkanal und auf der anderen Kolbenseite mit atmosphärischer Luft beaufschlagbar;
- es ist eine entgegen der Kraft der Druckflüssigkeit auf die Kolbenanordnung einwirkende Rückholfeder vorgesehen;
- der zweite Zylinder ist auf beiden Kolbenseiten an einen geschlossenen Hydraulikkreis angeschlossen, der ein in Bearbeitungsrichtung der Schieberbewegung schließendes und in Rücklaufrichtung öffnendes Rückschlagventil und ein Stromregelventil enthält.

Die Zweiteilung in zwei voneinander getrennte Hydraulikkreisläufe ermöglicht es, daß in dem offenen Kühlmittelkreislauf auch mehr oder weniger verunreinigtes Kühlmittel sowohl für den Planschieberantrieb als auch für die Kühlung und Spanabfuhr im Bearbeitungsbereich verwendet werden kann, und daß die gegen Verunreinigungen kritische Steuerung der Vorschub- und Rücklaufgeschwindigkeit in einem geschlossenen Hydraulikkreis durchgeführt werden kann. Da von der Betätigungsvorrichtung die von der Drehzahl des Plandrehkopfes abhängenden Zentrifugalkräfte im Schieberbereich überwunden werden müssen, muß der Schiebervorschub unter Anpassung an die jeweilige Bearbeitungsaufgabe von Fall zu Fall über das Stromregelventil im geschlossenen Hydraulikkreislauf eingestellt werden. Das Stromregelventil enthält zu diesem Zweck vorteilhafterweise eine von außen einstellbare Verstelldrossel zur Einstellung des Volumenstroms innerhalb des geschlossenen Hydraulikkreislaufs. Dabei ist zu berücksichtigen, daß es in dem Hydraulikkreislaufs zu erheblichen Druckschwankungen führen kann, und zwar beispielsweise aus folgenden Gründen:
- Schwerpunktsverlagerung der bewegten Massen in verschiedenen Hubstellungen des Schiebers;
- variable Drehzahlen und damit variable, am Schieber angreifende Zentrifugalkräfte;
- variable Belastung im Zuge des Bearbeitungsvorgangs aufgrund unterschiedlicher Spanquerschnitte;
- Druckschwankungen im Kühlmittelsystem.

Um die Vorschubgeschwindigkeit unabhängig von Druckschwankungen dieser Art konstant zu halten, enthält gemäß einer bevorzugten Ausgestaltung der Erfindung das Stromregelventil zusätzlich eine Druckwaage, mit der der an der Verstelldrossel eingestellte Volumenstrom sehr genau geregelt werden kann. Vorteilhafterweise weist die Druckwaage einen den Querschnitt einer Abflußöffnung des Stromregelventils steuernden, mit dem an der Verstelldrossel auftretenden Differenzdruck und einer in Öffnungsrichtung der Abflußöffnung wirkenden Druckfeder beaufschlagten Regelkolben auf.

Die auf die Kolbenanordnung einwirkende Feder und das Rückschlagventil im geschlossenen Hydraulikkreis ermöglichen ggf. unterstützt durch die am Schieber angreifende Zentrifugalkraft einen selbsttätigen schnellen Rücklauf des Schiebers in seine Ausgangsstellung.

Um beim Werkzeugwechsel einen Flüssigkeitsverlust aus dem Kühlmittelkanal des Tragkörpers zu vermeiden, ist auf der Eintrittsseite des Kühlmittelkanals ein vorgespanntes Rückschlagventil angeordnet. Um darüber hinaus einen Kühlmittelübertritt zur Bearbeitungsstelle des Plandrehkopfes zu ermöglichen und gleichwohl einen Flüssigkeitsaustritt beim Austauschen des Kopfteils zu vermeiden, ist auf der Austrittsseite des Kühlmittelkanals im Tragkörper ein den Flüssigkeitseintritt und den drucklosen Flüssigkeitsaustritt verhinderndes, eine Überströmdrossel enthaltendes Rückschlagventil angeordnet.

Beim Langzeitbetrieb ist eine Leckage von Hydraulikflüssigkeit aus dem geschlossenen Hydraulikkreislauf unvermeidlich. Ohne besondere Vorkehrungen wird die verlorengegangene Hydraulikflüssigkeit allmählich durch ein Luftpolster ersetzt, das wegen der Kompressibilität anfänglich zu Schaltverzögerungen und beim weiteren Fortschritt zu Bearbeitungsungenauigkeiten und Betriebsstörungen führen kann. Um dies zu vermeiden, wird gemäß einer bevorzugten Ausgestaltung der Erfingung dafür gesorgt, daß die verlorengegangene Hydraulikflüssigkeit ständig automatisch ergänzt wird. Zu diesem Zweck ist im Tragkörper ein Flüssigkeitsreservoir angeordnet, über welches Hydraulikflüssigkeit selbsttätig in den Hydraulikkreis nachgefüllt wird. Vorteilhafterweise ist das Flüssigkeitsreservoir als Kolbenzylinder ausgestaltet, der über ein Rückschlagventil mit dem Hydraulikkreis verbunden ist und dessen Kolben unter Vorspannung gegen die im Zylinder enthaltene Flüssigkeit einwirkt. Der Kolben liegt zweckmäßig unter der Einwirkung einer Feder gegen die Flüssigkeitssäule an. Außerdem kann der Kolben so angeordnet werden, daß er bei drehender Spindel unter der Einwirkung der Zentrifugalkraft auf die Flüssigkeitssäule einwirkt. Letzteres ist dann der Fall, wenn der Kolben radial nach außen gegen die Flüssigkeitssäule anliegt, insbesondere radial innerhalb der Flüssigkeitssäule im Flüssigkeitsreservoir angeordnet ist.

Eine Füllstandskontrolle im Flüssigkeitsreservoir und damit im geschlossenen Hydraulikkreis wird erfindungsgemäß dadurch realisiert, daß mit dem Kolben ein Zapfen starr verbunden ist, der bei Flüssigkeitsabnahme in einer Zapfenbohrung radial nach außen bewegt wird. Die Zapfenbohrung kann in einem Verschlußdeckel des Flüssigkeitsreservoirs im wesentlichen radial angeordnet sein. Erreicht der Kontrollzapfen in der Zapfenbohrung die äußere Kontur des Gehäuses, so ist dies ein Indiz dafür, daß Flüssigkeit nachgefüllt werden muß. Zu diesem Zweck kann das Flüssigkeitsreservoir über eine verschließbare Einfüllöffnung von außen her mit Hydraulikflüssigkeit gefüllt werden.

Gemäß einer weiteren vorteilhaften Ausgestaltung der Erfindung ist der Durchmesser des ersten Zylinders größer als der des zweiten Zylinders. Vorteilhafterweise weist der Tragkörper eine zur Drehachse konzentrische Stufenbohrung auf, die durch einen an der Bohrungsstufe angeflanschten, eine druckdichte Kolbenstangendurchführung aufweisenden Zwischendeckel in die beiden Zylinder unterteilt ist. Wenn der Tragkörper einen Steilkegelschaft aufweist, so ist zumindest der zweite Zylinder und die Rückholfeder innerhalb des Steilkegelschaftes angeordnet. Der Werkzeugeschaft kann dabei eine zum zweiten Zylinder hin offene, zur Drehachse konzentrische Ringaussparung zur Aufnahme der als Schraubendruckfeder ausgebildeten Rückholfeder aufweisen.

Vorteilhafterweise ist der Kolben des zweiten Zylinders auf der dem ersten Zylinder gegenüberliegenden Seite mit einer zur Spindel weisenden weiteren Kolbenstange versehen, die druckdicht in eine an die spindelseitige Anschlußöffnung für die Druckflüssigkeit anschließbare Flüssigkeitskammer eingreift, so daß der zum ersten Zylinder und zum Kopfteil führende Kühlmittelkanal durch die Kolbenstange und die weitere Kolbenstange axial hindurchgeführt werden kann. Um eine in axialer Richtung kompakte Bauweise des Tragkörpers zu erhalten, weist der Tragkörper eine zur Drehachse konzentrische Bohrung auf, in der ein einseitig offener, den zweiten Zylinder bildender und mit seinem eine druckdichte Kolbenstangendurchführung aufweisenden Boden den ersten Zylinder innerhalb der Bohrung begrenzender Zylindertopf angeordnet ist. Vorteilhafterweise weist der Zylindertopfboden eine zum ersten Zylinder offene ringförmige Eindrehung zur Aufnahme eines am ersten Kolben axial überstehenden, mindestens eine Umfangsnut zur Aufnahme eines Führungs- und/oder Dichtrings aufweisenden Ringansatzes auf.

Im folgenden wird die Erfindung anhand der in der Zeichnung in schematischer Weise dargestellten Ausführungsbeispiele näher erläutert. Es zeigen:
- Fig. 1: Schema eines Kühlmittel-betätigten Plandrehkopfes;
- Fig. 2: einen Querschnitt durch den Flanschbereich eines mit einer Betätigungsvorrichtung ausgestatteten Tragkörpers für einen Plandrehkopf;
- Fig. 3-5: verschiedene Längsschnitte durch den Tragkörper nach Fig. 2;
- Fig. 6: einen Längsschnitt durch einen gegenüber Fig. 2 bis 5 abgewandelten Tragkörper mit Betätigungsvorrichtung;
- Fig. 7: Schema des Stromregelventils mit Druckwaage.

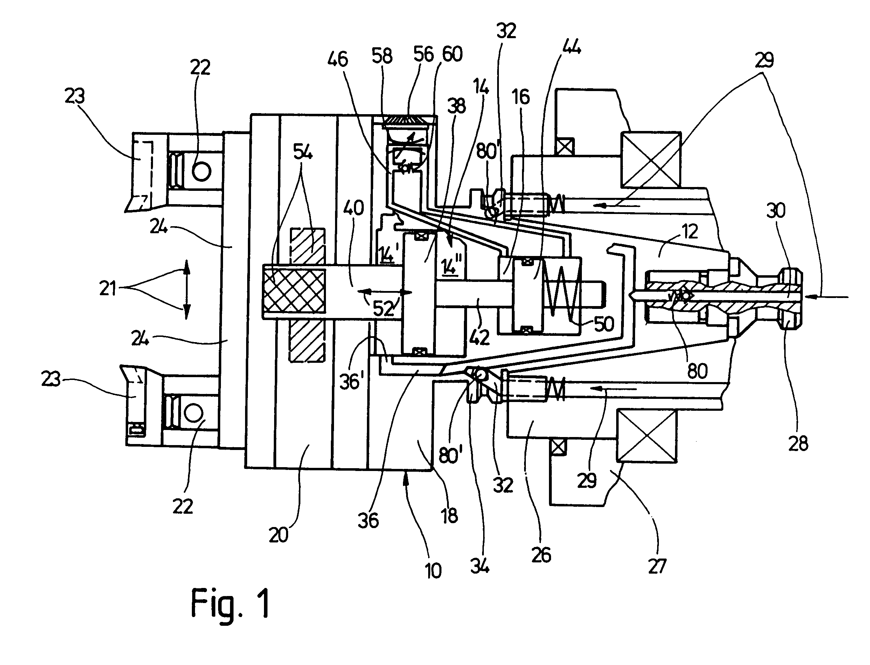

Wie insbesondere aus Fig. 1 zu ersehen ist, besteht der Plandrehkopf im wesentlichen aus einem einen Werkzeugschaft 12 und einen über den Werkzeugschaft radial überstehenden Halteflansch 18 aufweisenden Tragkörper 10, einem am Halteflansch 18 lösbar befestigbaren Kopfteil 20 und zwei am Kopfteil in Richtung der Pfeile 21 radial nach entgegengesetzten Seiten verschiebbaren, je eine Werkzeugaufnahme 22 für ein Aufsatzwerkzeug 23 tragenden Schiebern 24.

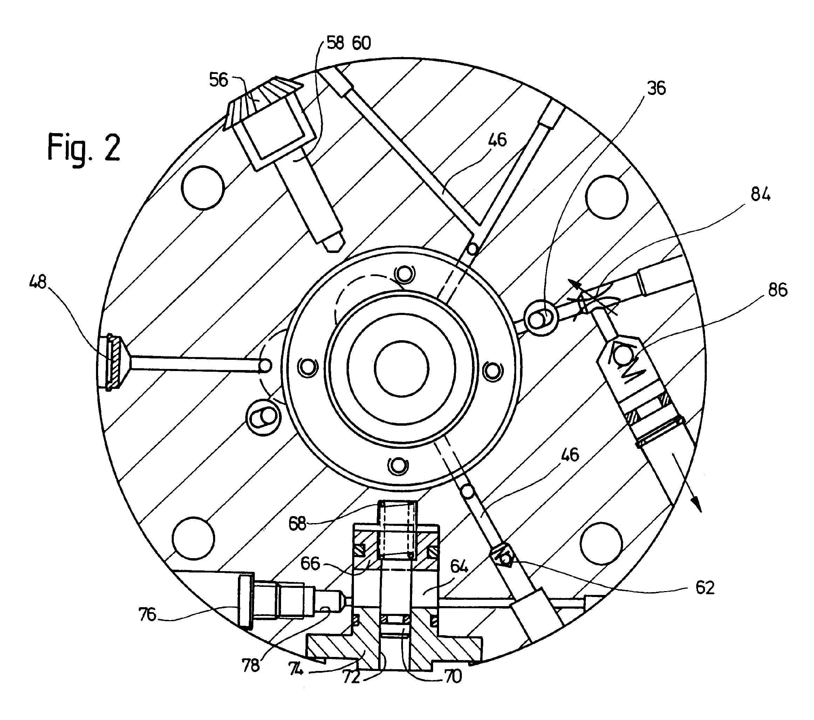

Der Tragkörper ist mit seinem im gezeigten Ausführungsbeispiel als Steilkegel ausgebildeten Werkzeugschaft 12 in der entsprechend konisch ausgebildeten Werkzeugaufnahme einer Spindel 26 einer Werkzeugmaschine 27 über den Einzugbolzen 28 mittels eines maschinenseitigen, nicht dargestellten Einzugmechanismus einspannbar. Die Werkzeugmaschine enthält ferner einen Kühlmittelkreislauf, der primär zur Kühlung der Werkzeuge 23 und zur Spanabfuhr an der Bearbeitungsstelle bestimmt ist. Die Kühlmittelzufuhr 29 in den Plandrehkopf erfolgt entweder zentral durch eine Eintrittsöffnung 30 im Bereich des Einzugbolzens 28 oder außermittig über Eintrittsöffnungen 32 im Bereich des Greifbundes 34 des Tragkörpers 10. Die Eintrittsöffnungen 30 bzw. 32 münden in einen Kühlmittelkanal 36, der über eine in Fig. 2 gezeigte Überströmdrossel 84 in das Kopfteil 20 und von dort über die Schieber 24 zu einer Austrittsstelle im Bereich der Werkzeuge 23 geführt ist.

Der Kühlmittelkanal 36 mündet mit dem Anschluß 36' ferner in einen innerhalb des Tragkörpers 10 angeordneten Kolbenzylinder 14, dessen Kolben 38 auf der einen Seite mit einer Zugstange 40 einer Verstelleinrichtung für die Schieber 24 und auf der anderen Seite über eine Kolbenstange 42 mit dem Kolben 44 eines zweiseitig an einen geschlossenen Hydraulikkreis 46 angeschlossenen Zylinders 16 verbunden ist. Im Zylinder 14 ist nur der zugstangenseitige Zylinderraum 14' mit Kühlmittel 29 beaufschlagt, während der Zylinderraum 14'' über einen als poröser Sinterkörper ausgebildeten Filter 48 mit der Außenatmosphäre verbunden ist. Auf der dem Kühlmittelanschluß 36' gegenüberliegenden Seite der Kolbenanordnung 38, 44 befindet sich im Zylinderraum 16'' des Zylinders 16 eine Rückholfeder 50, die bei drucklosem Kühlmittelanschluß 36' das im Zylinderraum 14' befindliche Kühlmittel unter Verschiebung der Kolbenanordnung 38, 44 in den Kühlmittelkanal 36 verdrängt.

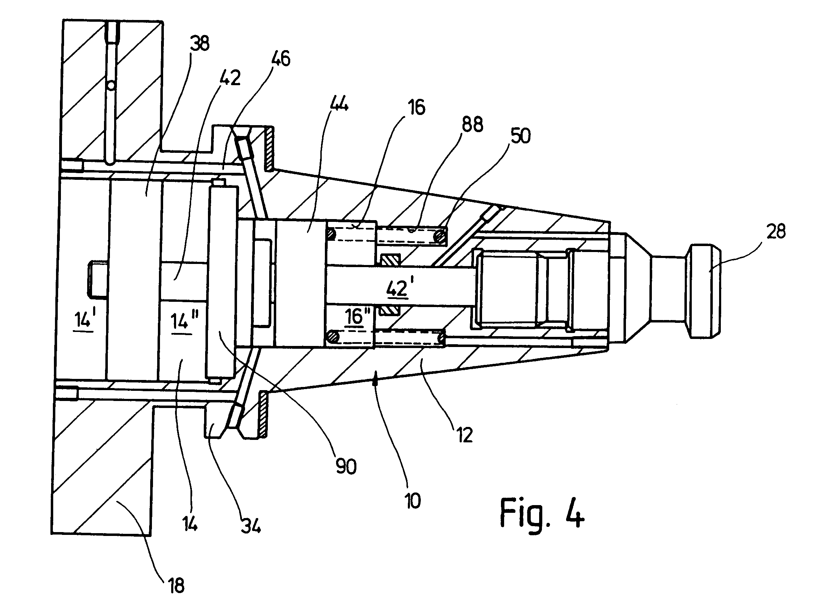

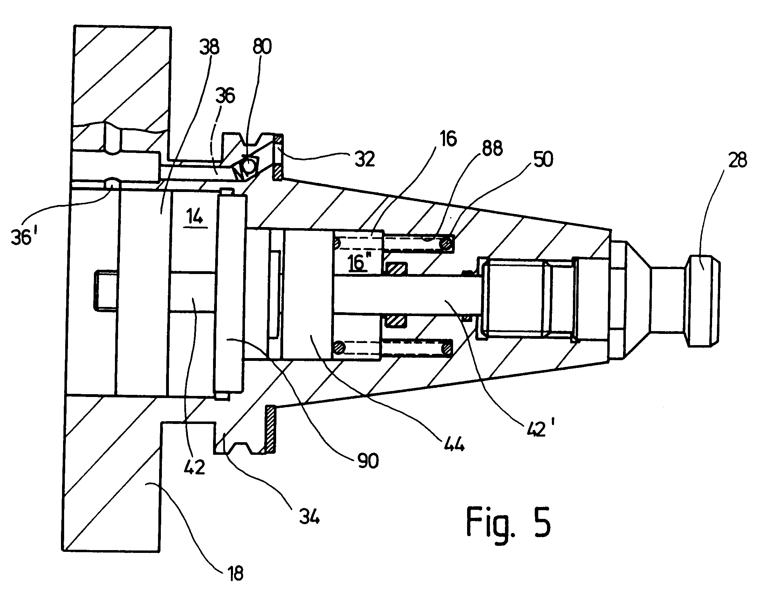

Bei dem in Fig. 2 bis 5 gezeigten Ausführungsbeispiel mündet die im Einzugbolzen 28 angeordnete Eintrittsöffnung 30 über das Rückschlagventil 80 in eine koaxial angeordnete Flüssigkeitskammer 110, in die eine spindelseitige über den Kolben 44 axial überstehende weitere Kolbenstange 42' druckdicht eingreift. Der Kühlmittelkanal 36 ist dort axial durch die Kolbenstange 42,42' zum Zylinder 14 geführt. Der Durchmesser der Kolbenstangen 42 und 42' ist gleich groß, so daß der Kolben 44 auf beiden Seiten die gleiche Kolbenfläche aufweist.

Die axiale Verschiebebewegung (Pfeile 52) der Kolbenanordnung 38, 44 wird über die Zugstange 40 und Getriebemittel 54 in eine nach entgegengesetzten Seiten gerichtete radiale Verschiebebewegung (Pfeile 21) der beiden Schieber 24 umgesetzt. Die Schwerpunktlage der Schieber 24 ist bei dem in Fig. 1 gezeigten Ausführungsbeispiel so gewählt, daß die Schieber bei einer Beaufschlagung des Zylinderraums 14' mit Druckflüssigkeit aus dem Kühlmittelkanal 36 entgegen der auf sie einwirkenden Zentrifugalkraft radial von außen nach innen verschoben werden, während bei drucklosem Kühlmittelanschluß 36' die durch die Feder 50 ausgelöste Rücklaufbewegung durch die auf die Schieber 24 einwirkende Zentrifugalkraft maßgeblich unterstützt wird.

Die Vorschubgeschwindigkeit der Schieber 24 und damit der Werkzeuge 23 kann in Anpassung an die jeweilige Bearbeitungsaufgabe, die Spindeldrehzahl und den über die Werkzeugmaschine 27 zur Verfügung gestellten Kühlmitteldruck über ein 2-Wege-Stromregelventil 58 mit einer von außen an einer Rändelschraube 56 verstellbaren Verstelldrossel 58' im geschlossenen Hydraulikkreis 46 eingestellt werden.

Das Stromregelventil 58 enthält zusätzlich eine den Querschnitt der Abflußöffnung A steuernde Druckwaage 59, deren Regelkolben mit dem Differenzdruck P₁-P₂ sowie der Kraft einer Druckfeder 61 beaufschlagbar ist.

Dabei bedeuten P₁ den Druck im Zufluß Z vor dem Drosselventil 58' und P₂ den Druck nach dem Drosselventil 58'.

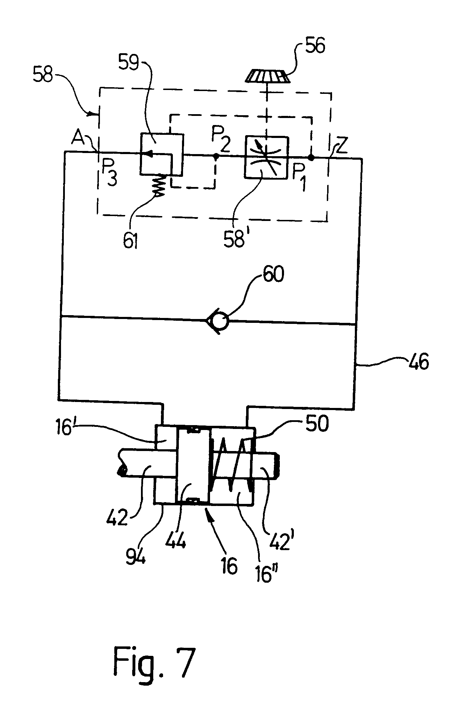

Wie eine einfache Überlegung zeigt, wird der am Drosselventil 58' eingestellte Volumenstrom auch dann eingehalten, wenn Druckschwankungen im Zufluß Z und/oder im Abfluß A (Druck P₃) des 2-Wege-Stromregelventils auftreten (Fig. 7).

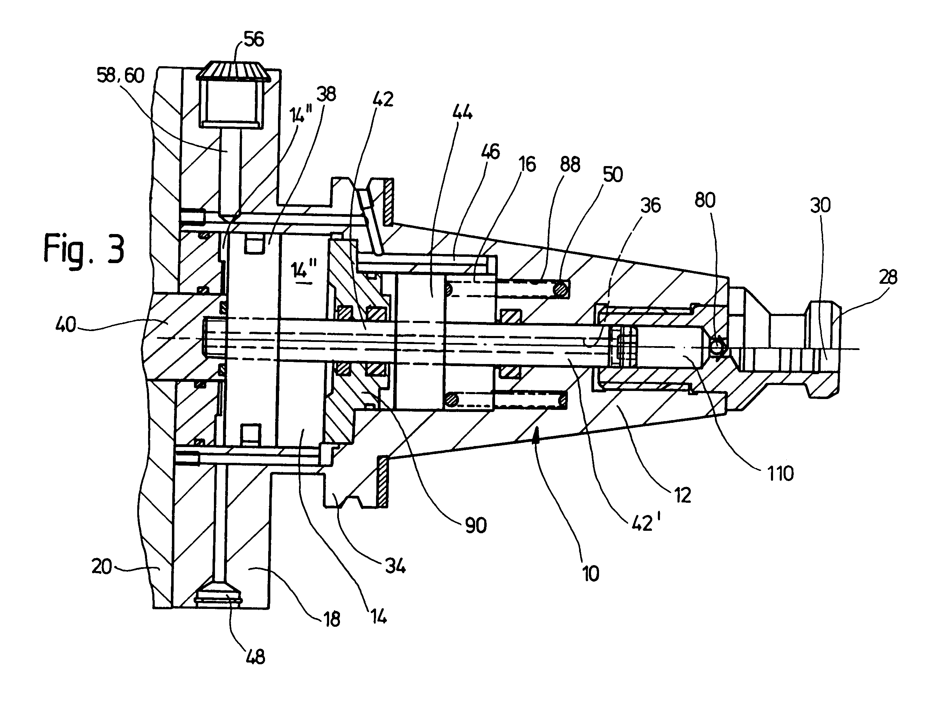

Ein zum Stromregelventil 58 parallelgeschaltetes Rückschlagventil 60 sorgt dafür, daß nach Beendigung des Arbeitsvorgangs und Unterbrechung der Kühlmittelzufuhr ein schneller Rücklauf der Werkzeuge 23 in ihre Ausgangsposition möglich ist. Das Stromregelventil 58 und das Rückschlagventil 60 sind als kombiniertes Bauteil im Bereich des Flanschs 18 von außen her in den Hydraulikkreis 46 eingesetzt (Fig. 2 und 3).

Wie insbesondere aus Fig. 2 zu ersehen ist, wird der geschlossene Hydraulikkreis 46 ständig über ein Rückschlagventil 62 mit Hydraulikflüssigkeit aus einem Reservoir 64 unter einem Vordruck beaufschlagt, der über einen Kolben 66 auf die Flüssigkeitssäule 64 ausgeübt wird. Der Kolben 66 wird dazu einmal unter der Einwirkung der Druckfeder 68 gegen die Flüssigkeitssäule gedrückt. Zum anderen wird der radial innerhalb der Flüssigkeitssäule 64 angeordnete Kolben 66 bei drehendem Werkzeug unter der Einwirkung der Zentrifugalkraft nach außen gegen die Flüssigkeitssäule gedrückt. Mit dieser Anordnung des Flüssigkeitsreservoirs wird gewährleistet, daß die während des Betriebs unvermeidlich aus dem geschlossenen Hydraulikkreis verschleppte Hydraulikflüssigkeit ohne Ausbildung eines die Betriebssicherheit störenden Luftpolsters selbsttätig ergänzt wird. Die beschriebene Anordnung erlaubt außerdem eine relativ einfache Füllstandskontrolle durch einen am Kolben 66 angeordneten Zapfen 70, der in einer nach außen offenen Zapfenbohrung 72 eines radial in den Flansch 14 des Tragkörpers 10 eingesetzten Deckels 74 flüssigkeitsdicht geführt ist. Erreicht der Zapfen 70 die äußere Kontur des Gehäuses, so muß Hydraulikflüssigkeit nachgefüllt werden. Zur luftfreien Nachfüllung von Hydraulikflüssikgeit ist eine in das Reservoir mündende, mit einer Verschlußschraube 76 verschließbare Einfüllöffnung 78 vorgesehen.

Um den Tragkörper ohne Flüssigkeitsverlust an der Spindel auswechseln zu können, befindet sich im Bereich der Eintrittsöffnungen 30 bzw. 32 jeweils ein Rückschlagventil 80. An der zum Kopfteil 20 führenden Austrittsseite des Kühlmittelkanals 36 befindet sich eine einstellbare Überströmdrossel 84 sowie ein Rückschlagventil 86, über die Kühlmittel zur Bearbeitungsstelle unter vermindertem Druck gelangen kann.

Wie aus den Fig. 3 bis 5 zu ersehen ist, ist die Rückholfeder 50 bei dem gezeigten Ausführungsbeispiel als Schraubendruckfeder ausgebildet, die mit ihrem einen Ende in eine mit dem Zylinderraum 16'' in Verbindung stehende Ringaussparung 88 eingreift. Die Zylinder 14 und 16 sind im Tragkörper als Stufenbohrung ausgebildet, an deren Stufenschulter ein die Zylinder voneinander trennender Zwischendeckel 90 angeflanscht ist, durch den die Kolbenstange 42 flüssigkeitsdicht durchgeführt ist.

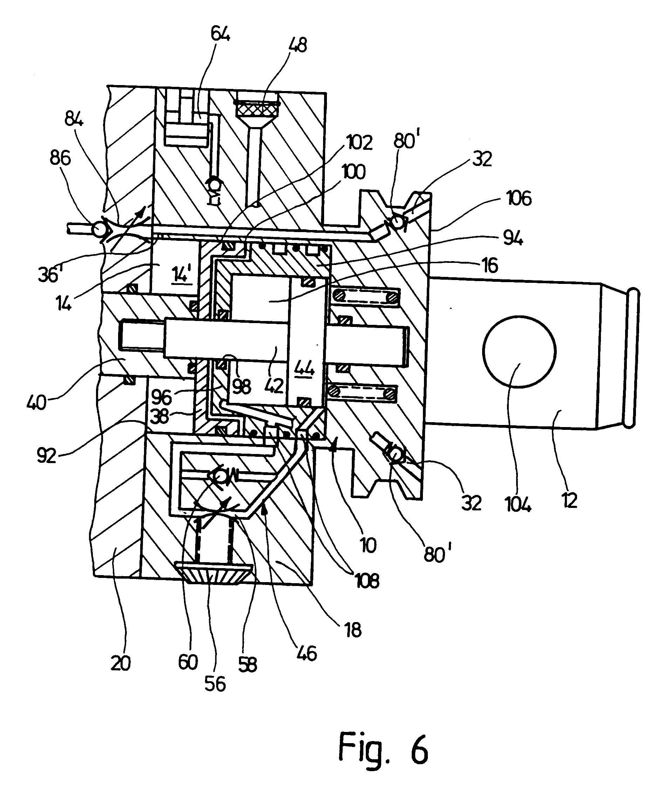

Das in Fig. 6 in einem Längsschnitt gezeigte Ausführungsbeispiel eines Tragkörpers 10 weist eine zum Kopfteil 20 offene axiale Bohrung 92 auf, in die ein einseitig offener, den zweiten Zylinder 16 bildender Zylindertopf 94 eingesetzt ist. Der Zylindertopf 94 begrenzt mit seinem Boden 96 innerhalb der Bohrung 92 zugleich den ersten Zylinder 14 und weist eine druckdichte Durchführung 98 für die die beiden Kolben 38,44 miteinander verbindende Kolbenstange 42 auf. Weiter enthält der Zylindertopf 94 an seinem bodenseitigen Ende eine radial außenliegende, zum ersten Zylinder offene ringförmige Eindrehung 100 zur Aufnahme eines am ersten Kolben 38 in dessen Umfangsbereich axial überstehenden Ringansatzes 102. Der mit Umfangsnuten für einen Führungsring und einen Dichtring versehene Ringansatz 102 vergrößert die im Zylinder 14 geführte Mantelfläche des dünnwandigen Kolbens 38 und gewährleistet dadurch eine kompakte Bauweise der Zylinderanordnung 14,14'. Die Kolbenstange 42 steht beidseitig mit gleichem Querschnitt über den Kolben 44 über, so daß die Kolbenfläche auf beiden Seiten gleich groß ist.

Der Werkzeugschaft ist bei dem in Fig. 6 gezeigten Ausführungsbeispiel als zylindrischer Paßzapfen 12' mit integriertem Spannmechanismus ausgebildet. Die Eintrittsöffnung 32 für das Kühlmittel sowie die Rückschlagventile 80' befinden sich im Bereich der dem Paßzapfen 12' zugewandten Planflächen 106 des Greifbundes 34 und sind mit den außermittig im Tragkörper 10 angeordneten Kühlmittelkanälen 36 verbunden. Die Kühlmittelkanäle 36 münden am Anschluß 36' in den Zylinderraum 14' und über die Uberstromdrossel 84 und das Rückschlagventil 86 in das Kopfteil 20.

Die in der Zylindertopfwandung 94 angeordneten, an die Zylinderräume 16' und 16'' angeschlossenen Hydraulikkanäle sind unter Bildung des geschlossenen Hydraulikkreises 46 über axial abgedichtete Umfangsnuten 108 mit den im Flanschbereich 18 befindlichen, zur Einstelldrossel 58, zum Rückschlagventil 60 und zum Flüssigkeitsreservoir 64 führenden Kanälen verbunden.

## Patentansprüche

1. Vorrichtung zur Halterung und Betätigung eines Plandrehkopfes mit einem an einer Maschinenspindel (26) lösbar befestigbaren Tragkörper (10), mit einem am Tragkörper lösbar befestigbaren Kopfteil (20), mit mindestens einem im wesentlichen quer zur Drehachse am Kopfteil verschiebbaren, ein Werkzeug (23) oder eine Werkzeugaufnahme (22) tragenden Schieber (24), mit einem eine axial verschiebbare Stellstange (40) und die Axialbewegung der Stellstange in eine Querbewegung des Schiebers umsetzende Getriebemittel (54) aufweisenden Verstellmechanismus und mit einem im Tragkörper angeordneten, eintrittsseitig an eine Anschlußöffnung der Spindel anschließbaren und austrittsseitig in das Kopfteil mündenden, mit Druckflüssigkeit beaufschlagbaren Kühlmittelkanal (36), **dadurch** **gekennzeichnet,** daß der Tragkörper (10) zwei im Abstand voneinander angeordnete, zur Drehachse koaxiale Zylinder (14, 16) aufweist, in denen zwei starr miteinander gekoppelte und mit der Stellstange (40) verbindbare Kolben (38, 44) angeordnet sind, daß der erste der beiden Zylinder (14) auf der einen Kolbenseite (14'') mit Druckflüssigkeit (29) aus dem Kühlmittelkanal (36) und auf der anderen Kolbenseite (14'') mit atmosphärischer Luft beaufschlagbar ist, daß eine entgegen der Kraft der Druckflüssigkeit auf die Kolbenanordnung (38, 44) einwirkende Rückholfeder (50) vorgesehen ist, und daß der zweite Zylinder (16) auf beiden Kolbenseiten an einen geschlossenen Hydraulikkreis (46) angeschlossen ist, der ein in Bearbeitungsrichtung der Schieberbewegung schließendes und in Rücklaufrichtung öffnendes Rückschlagventil (60) und ein zum Rückschlagventil (60) parallelgeschaltetes Stromregelventil (58) enthält.

2. Vorrichtung nach Anspruch 1, **dadurch gekennzeichnet,** daß auf der Eintrittsseite (30) des Kühlmittelkanals (36) des Tragkörpers (10) ein den Flüssigkeitsaustritt aus dem Tragkörper verhinderndes Rückschlagventil (80) angeordnet ist.

3. Vorrichtung nach Anspruch 1 oder 2, **dadurch gekenn****zeichnet,** daß auf der Austrittsseite des Kühlmittelkanals (36) des Tragkörpers (10) eine Überströmdrossel (84) und ein den Flüssigkeitseintritt verhinderndes Rückschlagventil (86) angeordnet ist.

4. Vorrichtung nach einem der Ansprüche 1 bis 3, **dadurch gekennzeichnet,** daß die Rückholfeder (50) auf der dem ersten Kolben (38) gegenüberliegenden Seite (16'') des zweiten Kolbens (44) angeordnet ist.

5. Vorrichtung nach einem der Ansprüche 1 bis 4, **dadurch gekennzeichnet,** daß die luftgefüllte Seite (14'') des ersten Zylinders (14) über ein vorzugsweise als poröse Sinterscheibe ausgebildetes Filterelement (48) mit der Atmosphäre verbunden ist.

6. Vorrichtung nach einem der Ansprüche 1 bis 5, **ge****kennzeichnet durch** ein im Tragkörper angeordnetes Flüssigkeitsreservoir (64) zur selbsttätigen Nachfüllung von Hydraulikflüssigkeit in den geschlossenen Hydraulikkreis (46).

7. Vorrichtung nach Anspruch 6, **dadurch gekennzeichnet,** daß das Flüssigkeitsreservoir (64) über ein Rückschlagventil (62) mit dem Hydraulikkreis (46) verbunden ist und einen unter Vorspannung gegen die im Flüssigkeitsreservoir (64) vorhandene Flüssigkeitssäule wirkenden Kolben (66) enthält.

8. Vorrichtung nach Anspruch 7, **dadurch gekennzeichnet,** daß der Kolben (66) unter der Einwirkung einer Feder (68) gegen die Flüssigkeitssäule anliegt.

9. Vorrichtung nach Anspruch 7 oder 8, **dadurch gekenn****zeichnet,** daß der Kolben (66) bei drehendem Plandrehkopf unter der Einwirkung der Zentrifugalkraft gegen die Flüssigkeitssäule andrückbar ist.

10. Vorrichtung nach einem der Ansprüche 7 bis 9, **dadurch gekennzeichnet,** daß der Kolben einen radial nach außen weisenden, durch seine Verschiebelage in einer Zapfenbohrung (72) den Füllstand im Flüssigkeitsreservoir (64) anzeigenden Kontrollzapfen (70) trägt.

11. Vorrichtung nach Anspruch 10, **dadurch gekennzeichnet,** daß die Zapfenbohrung (72) einen Verschlußdeckel (74) des Flüssigkeitsreservoirs (64) im wesentlichen radial durchsetzt und daß die Zapfenbohrung (72) gleich lang wie oder kürzer als der Kontrollzapfen (70) ist.

12. Vorrichtung nach einem der Ansprüche 1 bis 11, **dadurch gekennzeichnet,** daß der Durchmesser des ersten Zylinders (14) größer als der des zweiten Zylinders (16) ist.

13. Vorrichtung nach einem der Ansprüche 1 bis 12, **dadurch gekennzeichnet,** daß der Tragkörper (10) einen als Steilkegel ausgebildeten oder zylindrischen Werkzeugschaft (12) aufweist, und daß zumindest einer der beiden Zylinder (16) und die Rückholfeder (50) teilweise oder ganz innerhalb des Werkzeugschaftes (12) angeordnet ist.

14. Vorrichtung nach einem der Ansprüche 1 bis 13, **da****durch gekennzeichnet,** daß der Tragkörper (10) eine zum zweiten Zylinder (16) hin offene, zur Drehachse konzentrische Ringaussparung (88) zur Aufnahme der als Schraubendruckfeder ausgebildeten Rückholfeder (50) enthält.

15. Vorrichtung nach einem der Ansprüche 1 bis 14, **gekennzeichnet durch** eine im Tragkörper (10) angeordnete, zur Drehachse konzentrische Stufenbohrung, die durch einen an der Bohrungsstufe angeflanschten, eine druckdichte Kolbenstangendurchführung aufweisenden Zwischendeckel (90) in die beiden Zylinder (14, 16) unterteilt ist.

16. Vorrichtung nach einem der Ansprüche 1 bis 12, **gekennzeichnet durch** eine im Tragkörper (10) angeordnete, zur Drehachse konzentrische Bohrung (92), in der ein einseitig offener, den zweiten Zylinder (16) bildender und mit seinem eine druckdichte Kolbenstangendurchführung (98) aufweisenden Boden (96) den ersten Zylinder (14) innerhalb der Bohrung (92) begrenzender Zylindertopf (94) angeordnet ist.

17. Vorrichtung nach Anspruch 15 oder 16, **dadurch gekennzeichnet,** daß der Zwischendeckel (90) oder der Zylindertopfboden (96) eine zum ersten Zylinder (14) offene ringförmige Eindrehung (100) zur Aufnahme eines am ersten Kolben (30) axial überstehenden, mindestens eine Umfangsnut zur Aufnahme eines Führungs- und/oder Dichtrings aufweisenden Ringansatzes (102) aufweist.

18. Vorrichtung nach einem der Ansprüche 1 bis 17, **dadurch gekennzeichnet,** daß am Kolben (44) des zweiten Zylinders (16) beidseitig überstehende Kolbenstangen (42,42') mit dem gleichen Durchmesser angeordnet sind.

19. Vorrichtung nach einem der Ansprüche 1 bis 18, **dadurch gekennzeichnet,** daß der Kolben (44) des zweiten Zylinders (16) beidseitig gleich große Kolbenflächen aufweist.

20. Vorrichtung nach einem der Ansprüche 1 bis 19,**dadurch gekennzeichnet,** daß der Kolben (44) des zweiten Zylinders (16) auf der dem ersten Zylinder (14) gegenüberliegenden Seite eine zur Spindel (26) weisende, druckdicht in eine an die spindelseitige Anschlußöffnung für die Druckflüssigkeit anschließbare Flüssigkeitskammer (110) eingreifende weitere Kolbenstange (42') aufweist, und daß der zum ersten Zylinder (14) und zum Kopfteil (20) führende Kühlmittelkanal (36) durch die Kolbenstange (42') axial hindurchgeführt ist.

21. Vorrichtung nach einem der Ansprüche 1 bis 20, **dadurch gekennzeichnet,** daß das Stromregelventil (58) eine Verstelldrossel (58') aufweist.

22. Vorrichtung nach Anspruch 21, **dadurch gekennzeichnet,** daß das Stromregelventil (58) eine der Verstelldrossel (58') zugeordnete Druckwaage (59) aufweist.

23. Vorrichtung nach Anspruch 22, **dadurch gekennzeich-** **net,** daß die Druckwaage (59) einen den Strömungsquerschnitt einer Abflußöffnung (A) steuernden, mit der an der Verstelldrossel (58') auftretenden Druckdifferenz (P₁-P₂) und einer in Öffnungsrichtung der Abflußöffnung (A) wirkenden Druckfeder (61) beaufschlagten Regelkolben aufweist.

24. Vorrichtung nach einem der Ansprüche 1 bis 23, **dadurch gekennzeichnet,** daß das Stromregelventil (58) und das Rückschlagventil (60) eine auswechselbare Baueinheit bilden.

## Claims

1. A device for holding and operatins a facing head comprising a supporting body (10) releasably fixable to a machine spindle (26) comprising a head element (20) releasably fixable to the supporting body, comprising at least one slide (24) movable essentially transversely with respect to the axis, of rotation on the head element, and carrying a tool (23) or a tool carrier (22), comprising an adjusting mechanism having an axially movable actuator rod (40) and a gear means (54) converting the axial movement of the actuator rod into a transverse movement, of the slide, and comprising a coolant channel (36) arranged in the supporting body, connectable on an inlet side to a connecting opening to the spindle and terminating on the outlet side in the head element, and loadable with pressure fluid, characterized in that the supporting body (10) has two chambers (14, 16) arranged spaced from one another and coaxial with respect to the axis of rotation, in which chambers are arranged two pistons (38, 44) rigidly coupled with one another and connectable to the actuator rod (40), that the first of the two chambers (14) is loadable on one side of the piston (14'') with pressure fluid (29) from the coolant channel (36) and on the other side of the piston (14'') with atmospheric air, that a return spring (50) acting against the force of the pressure fluid onto the piston arrangement (38, 44) is provided, and that the second chamber (16) is connected on opposite sides of the piston to a closed hydraulic circuit (46) including a check valve (60) closing in machining direction of the slide movement and opening in return direction, and a flow-control valve (58) connected parallel with the check valve (60).

2. The device according to Claim 1, characterized in that a check valve (80) preventing the fluid from exiting from the supporting body (10) is arranged on the inlet side (30) of the coolant channel (36) of the supporting body (10).

3. The device according to Claim 1 or 2, characterized in that an overflow throttle (84) and a check valve (86) preventing the exiting of the fluid are arranged on the outlet side of the coolant channel (36) of the supporting body (10).

4. The device according to one of the Claims 1 to 3, characterized in that the return spring (50) is arranged on the side (16'') of the second piston (44), which side is opposite the first piston (38).

5. The device according to one of the Claims 1 to 4, characterized in that the air-filled side (14'') of the first chamber (14) is connected to the atmosphere through a filter element (48) preferably designed as a porous sintered disk.

6. The device according to one of the Claims 1 to 5, characterized by a fluid reservoir (64) arranged in the supporting body for the automatic refilling of hydraulic fluid into the closed hydraulic circuit (46).

7. The device according to Claim 6, characterized in that the fluid reservoir (64) is connected to the hydraulic circuit (46) through a check valve (62) and contains a piston (66) acting under an initially applied force against the fluid column (64) in the fluid reservoir (64).

8. The device according to Claim 7, characterized in that the piston (66) rests against the fluid column under the action of a spring (68).

9. The device according to Claim 7 or 8, characterized in that the piston (66), with the facing head rotating, can be pressed against the fluid column under the action of the centrifugal force.

10. The device according to one of the Claims 7 to 9, characterized in that the piston carries a radially outwardly extending control pin (70) indicating the fill level in the fluid reservoir (64) by its position in a pin hole (72).

11. The device according to Claim 10, characterized in that the pin hole (72) extends essentially radially through a locking lid (74) of the fluid reservoir (64), and that the pin hole (72) has the same length or is shorter than the control pin (70).

12. The device according to one of the Claims 1 to 11, characterized in that the diameter of the firstchamber (14) is larger than the one of the second chamber (16).

13. The device according to one of the Claims 1 to 12, characterized in that the supporting member (10) has a tool shaft (12) designed as a steep-angle taper or as a cylinder, and that at least one of the two chambers (16) and the return spring (50) are arranged partially or completely within the tool shaft (12).

14. The device according to one of the Claims 1 to 13, characterized in that the supporting body (10) contains an annular recess (88) which opens toward the second chamber (16) and is concentric with respect to the axis of rotation for receiving therein the return spring (50) in the form of a compression spring.

15. The device according to one of the Claims 1 to 14, characterized by a step bore arranged in the supporting body (10) concentric with respect to the axis of rotation, which step bore is divided into two chambers (14, 16) by an intermediate lid (90) connected to the bore step and having a fluid-tight sealed piston-rod receiving through opening therein.

16. The device according to one of the Claims 1 to 12, characterized by a bore (92) arranged in the supporting body (10) concentric with respect to the axis of rotation, in which bore is arranged a cup-shaped piston (94) open on one side to form the second cylinder (16) and defining with a bottom wall (96) the first chamber (14) within the bore (92), the bottom wall having a fluid-tight sealed piston-rod receiving through opening (98) therein.

17. The device according to Claim 15 or 16, characterized in that the intermediate lid (90) or the bottom wall (96) of the cup-shaped piston has an annular recess (100) open toward the first chamber (14) to receive an annular shoulder (102) axially projecting from the first piston (30) and having at least one peripheral groove to receive a guide and/or seal ring therein.

18. The device according to one of the Claims 1 to 17, characterized in that piston rods (42, 42') are arranged on and project from opposite sides of the piston (44) in the second chamber (16) and have the same diameter.

19. The device according to one of the Claims 1 to 18, characterized in that the piston (44) in the second chamber (16) has piston surface area of equal size on opposite sides thereof.

20. The device according to one of the Claims 1 to 19, characterized in that the piston (44) in the second chamber (16) has on the side remote from the first chamber (14) a further piston rod (42') which extends toward the spindle (26) and is sealingly, slidingly received in a fluid chamber (110) connectable to the connecting opening for the pressure fluid, which connecting opening is on the side of the spindle, and that the coolant channel (36) leading to the first chamber (14) and to the head element (20) extends axially through the piston rod (42').

21. The device according to one of the Claims 1 to 20, characterized in that the flow-control valve (58) has an adjusting throttle (58').

22. The device according to Claim 21, characterized in that the flow-control valve (58) has a piston manometer (59) associated with the adjusting throttle (58').

23. The device according to Claim 22, characterized in that the piston manometer (59) has an operating piston controlling the flow cross section of an outlet opening (A) and loaded with the pressure difference (P₁-P₂) occurring at the adjusting throttle (58), and a pressure spring (61) acting in opening direction of the outlet opening (A).

24. The device according to one of the Claims 1 to 23, characterized in that the flow-control valve (58) and the check valve (60) form an exchangeable structural unit.

## Revendications

1. Dispositif de fixation et d'actionnement d'une tête à surfacer, comportant un corps support (10) fixable à une broche de machine (26), une partie tête (20) fixable à ce corps support, au moins un coulisseau (24) mobile sur cette partie tête sensiblement perpendiculairement à l'axe de rotation et portant un outil (23) ou un porte-outil (22), un mécanisme de manoeuvre présentant une tige de manoeuvre (40) mobile axialement (40) et des moyens de transmission (54) transformant le mouvement axial de cette tige de manoeuvre en un mouvement transversal du coulisseau, et un conduit de liquide d'arrosage (36) situé dans le corps support, raccordable du côté entrée à un orifice de raccordement de la broche et débouchant du côté sortie dans la partie tête, et alimentable en liquide sous pression, caractérisé par le fait que le corps support (10) présente deux cylindres espacés (14, 16) dont l'axe coïncide avec l'axe de rotation et dans lesquels sont montés deux pistons (38, 44) accouplés rigidement et pouvant être joints à la tige de manoeuvre (40), que dans le premier (14) des deux cylindres peuvent être admis, sur un côté (14') de son piston, du liquide sous pression (29) issu du conduit de liquide d'arrosage (36) et, sur l'autre côté (14'') de son piston, de l'air atmosphérique, qu'il est prévu un ressort de rappel (50) agissant sur le système de pistons (38, 44) contre l'action du liquide sous pression, et que le deuxième cylindre (16) est raccordé sur les deux côtés de son piston à un circuit hydraulique fermé (46) qui contient un clapet de non-retour (60) se fermant dans le sens d'usinage du mouvement du coulisseau et s'ouvrant dans le sens de retour et un régulateur de débit (58) monté en parallèle avec ce clapet de non-retour (60).

2. Dispositif selon la revendication 1, caractérisé par le fait que du côté entrée (30) du conduit de liquide d'arrosage (36) du corps support (10) est monté un clapet de non-retour (80) empêchant la sortie de liquide du corps support.

3. Dispositif selon l'une des revendications 1 et 2, caractérisé par le fait que du côté sortie du conduit de liquide d'arrosage (36) du corps support (10) sont montés un réducteur de débit (84) et un clapet de non-retour (86) empêchant l'entrée de liquide.

4. Dispositif selon l'une des revendications 1 à 3, caractérisé par le fait que le ressort de rappel (50) est placé sur le côté (16'') du deuxième piston (44) opposé au premier piston (38).

5. Dispositif selon l'une des revendications 1 à 4, caractérisé par le fait que le côté rempli d'air (14'') du premier cylindre (14) est relié à l'atmosphère par l'intermédiaire d'un élément filtrant (48) constitué de préférence d'un plaque frittée poreuse.

6. Dispositif selon l'une des revendications 1 à 5, caractérisé par un réservoir de fluide (64) situé dans le corps support et destiné au remplissage complémentaire automatique en fluide hydraulique du circuit hydraulique fermé (46).

7. Dispositif selon la revendication 6, caractérisé par le fait que le réservoir de fluide (64) est relié au circuit hydraulique (46) par l'intermédiaire d'un clapet de non-retour (62) et contient un piston (66) agissant en précharge contre la colonne de fluide existant dans le réservoir (64).

8. Dispositif selon la revendication 7, caractérisé par le fait que le piston (66) s'appuie contre la colonne de fluide sous l'action d'un ressort (68).

9. Dispositif selon l'une des revendications 7 et 8, caractérisé par le fait que lorsque la tête à surfacer tourne, le piston (66) peut être serré contre la colonne de fluide sous l'action de la force centrifuge.

10. Dispositif selon l'une des revendications 7 à 9, caractérisé par le fait que le piston porte un téton de contrôle dirigé radialement vers l'extérieur (70) qui indique par sa position dans un alésage (72) le niveau dans le réservoir de fluide (64).

11. Dispositif selon la revendication 10, caractérisé par le fait que l'alésage (72) traverse sensiblement radialement un couvercle (74) du réservoir de fluide (64) et est de même longueur ou plus court que le téton de contrôle (70).

12. Dispositif selon l'une des revendications 1 à 11, caractérisé par le fait que le diamètre du premier cylindre (14) est supérieur à celui du deuxième cylindre (16).

13. Dispositif selon l'une des revendications 1 à 12, caractérisé par le fait que le corps support (10) présente une queue d'outil (12) au cône standard américain ou cylindrique et qu'au moins l'un (16) des deux cylindres et le ressort de rappel (50) sont placés partiellement ou entièrement à l'intérieur de cette queue d'outil (12).

14. Dispositif selon l'une des revendications 1 à 13, caractérisé par le fait que le corps support (10) présente à l'intérieur un évidement annulaire (88) ouvert vers le deuxième cylindre (16) et dont l'axe coïncide avec l'axe de rotation destiné à recevoir le ressort de rappel (50), qui est un ressort hélicoïdal de compression.

15. Dispositif selon l'une des revendications 1 à 14, caractérisé par un alésage étagé fait dans le corps support (10) dont l'axe coïncide avec l'axe de rotation et qui est divisé en les deux cylindres (14, 16) par un couvercle intermédiaire (90) bridé au gradin de l'alésage et présentant un passage étanche à la pression pour la tige de pistons.

16. Dispositif selon l'une des revendications 1 à 12, caractérisé par un alésage (92) fait dans le corps support (10) dont l'axe coïncide avec l'axe de rotation et dans lequel est placé un pot (94) ouvert d'un côté, formant le deuxième cylindre (16) et limitant le premier cylindre (14) à l'intérieur de l'alésage (92) par son fond (96) présentant un passage étanche à la pression (98) pour la tige de pistons.

17. Dispositif selon l'une des revendications 15 et 16, caractérisé par le fait que le couvercle intermédiaire (90) ou le fond (96) du pot présente une gorge annulaire (100) ouverte vers le premier cylindre (14) destinée à recevoir un appendice annulaire (102) saillant axialement sur le premier piston (38) et présentant au moins une gorge circonférentielle destinée à recevoir une bague de guidage et/ou un joint annulaire.

18. Dispositif selon l'une des revendications 1 à 17, caractérisé par le fait que sur le piston (44) du deuxième cylindre (16) sont prévues des tiges de piston de même diamètre (42, 42') saillant des deux côtés.

19. Dispositif selon l'une des revendications 1 à 18, caractérisé par le fait que le piston (44) du deuxième cylindre (16) a des deux côtés la même surface.

20. Dispositif selon l'une des revendications 1 à 19, caractérisé par le fait que le piston (44) du deuxième cylindre (16) présente sur le côté opposé au premier cylindre (14) une autre tige de piston (42') dirigée vers la broche (26) et s'engageant de manière étanche à la pression dans une chambre à liquide (110) raccordable à l'orifice de raccordement côté broche pour le liquide sous pression, et que le conduit de liquide d'arrosage (36) allant au premier cylindre (14) et à la partie tête (20) traverse axialement cette tige de piston (42').

21. Dispositif selon l'une des revendications 1 à 20, caractérisé par le fait que le régulateur de débit (58) présente un réducteur de débit réglable (58').

22. Dispositif selon la revendication 21, caractérisé par le fait que le régulateur de débit (58) présente un compensateur de pression (59) associé au réducteur de débit réglable (58').

23. Dispositif selon la revendication 22, caractérisé par le fait que le compensateur de pression (59) présente un piston régulateur qui commande la section de passage d'un orifice de sortie (A) et est soumis à l'action de la différence de pression (P₁ - P₂) entre l'entrée et la sortie du réducteur de débit réglable (58') et à celle d'un ressort de compression (61) agissant dans le sens d'ouverture de l'orifice de sortie (A).

24. Dispositif selon l'une des revendications 1 à 23, caractérisé par le fait que le régulateur de débit (58) et le clapet de non-retour (60) forment un bloc changeable.
